(19) Europäisches Patentamt
European Patent Office
Office européen des brevets

(11) **EP 4 075 160 B1**

(12) **EUROPEAN PATENT SPECIFICATION**

(45) Date of publication and mention
of the grant of the patent:
**22.10.2025 Bulletin 2025/43**

(21) Application number: **20913656.3**

(22) Date of filing: **03.12.2020**

(51) International Patent Classification (IPC):
***G01S 7/481*** *(2006.01)*   ***G02B 5/26*** *(2006.01)*
***G01S 17/931*** *(2020.01)*   ***G02B 5/20*** *(2006.01)*

(52) Cooperative Patent Classification (CPC):
**G02B 5/208; G01S 7/4813; G01S 17/931;**
**G02B 5/26**

(86) International application number:
**PCT/JP2020/045122**

(87) International publication number:
**WO 2021/145089 (22.07.2021 Gazette 2021/29)**

(54) **NEAR-INFRARED SENSOR COVER**

ABDECKUNG FÜR NAHINFRAROTSENSOR

COUVERTURE DE CAPTEUR PROCHE INFRAROUGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **16.01.2020 JP 2020005024**

(43) Date of publication of application:
**19.10.2022 Bulletin 2022/42**

(73) Proprietor: **Toyoda Gosei Co., Ltd.**
**Kiyosu-shi, Aichi 452-8564 (JP)**

(72) Inventors:
• **FUKAGAWA Koji**
**Kiyosu-shi, Aichi 452-8564 (JP)**

• **OKUMURA Koji**
**Kiyosu-shi, Aichi 452-8564 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
WO-A1-2019/058834    JP-A- 2009 198 192
JP-A- 2011 091 596    JP-A- 2012 027 337
JP-A- 2014 069 634    JP-A- 2019 139 141
JP-A- 2019 168 264    US-A1- 2019 293 485

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a near-infrared ray sensor cover including a cover main body portion that is arranged in front in a transmission direction of a near-infrared ray transmitted from a near-infrared ray sensor, and has near-infrared ray transmission properties.

BACKGROUND ART

A near-infrared ray sensor may be mounted on a vehicle to detect surrounding conditions. The near-infrared ray sensor transmits near-infrared rays to the outside of the vehicle, and receives near-infrared rays reflected by hitting objects outside the vehicle, such as a preceding vehicle or a pedestrian. The transmitted and received near-infrared rays are used for detecting a position of the object, and are used for measuring a distance between the vehicle and the object, or a relative speed. When the near-infrared ray sensor is arranged in an exposed state, the near-infrared ray sensor will be seen from the outside of the vehicle and appearance will be impaired. Therefore, a near-infrared ray sensor cover that hides the near-infrared ray sensor and allows the near-infrared ray to pass therethrough is arranged in front of the near-infrared ray sensor in the transmission direction of the near-infrared ray.

The near-infrared ray sensor cover includes, for example, a base member and a decorative layer formed on a rear surface of the base member in the transmission direction of the near-infrared ray. The base member is formed of a transparent resin material having near-infrared ray transmission properties. The decorative layer is formed of a material that reflects visible light and has near-infrared ray transmission properties.

Therefore, the decorative layer can be seen from the front of the near-infrared ray sensor cover in the transmission direction through the transparent base member, and the near-infrared ray sensor cover is decorated with the decorative layer. In addition, a situation in which the near-infrared ray sensor can be seen is obstructed by the decorative layer. In this manner, appearance of the near-infrared ray sensor cover and a peripheral part thereof is improved.

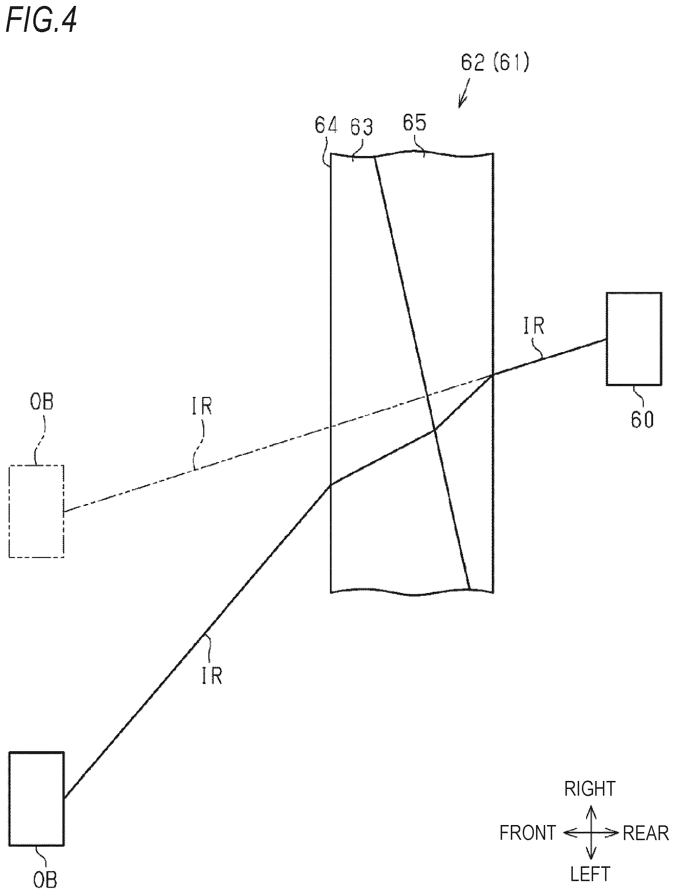

In the near-infrared ray sensor cover, it is desired that the decorative layer be seen three-dimensionally in order to further improve the appearance. Therefore, for example, as illustrated in Fig. 4, the base member in a cover main body portion 62 includes a front base member 63 configuring a front portion of the base member in the transmission direction and a rear base member 65 configuring a rear portion. The decorative layer (not illustrated) is arranged between the front base member 63 and the rear base member 65 in a state of having irregularities in the transmission direction.

However, when a refractive index of the front base member 63 and a refractive index of the rear base member 65 are different, a near-infrared ray IR transmitted from a near-infrared ray sensor 60 is refracted when passing through a boundary surface between the rear base member 65 and the front base member 63, and changes a traveling direction. As illustrated by a solid line in Fig. 4, an angle of the near-infrared ray IR transmitted from the near-infrared ray sensor 60 and an angle of the near-infrared ray IR refracted when passing through a front surface 64 of the front base member 63 are different. In other words, the angle of the near-infrared ray IR differs before and after passing through the cover main body portion 62.

On the other hand, when a near-infrared ray sensor cover 61 is not arranged in front of the near-infrared ray sensor 60 in the transmission direction, the near-infrared ray IR transmitted from the near-infrared ray sensor 60 travels in the same direction as that when transmitted from the near-infrared ray sensor 60 without being refracted as indicated by a two-dot chain line in Fig. 4.

Then, as described above, a case where the near-infrared ray IR is emitted from the cover main body portion 62 (the front surface 64 of the front base member 63) at an angle different from that when transmitted from the near-infrared ray sensor 60, makes it difficult for the near-infrared ray sensor 60 to correctly detect a position of an object OB outside the vehicle. The position of the detected object OB deviates from the position of the actual object OB. In Fig. 4, the object OB is actually positioned at a place indicated by the two-dot chain line, but it is erroneously detected that the object OB is positioned at a place indicated by the solid line in Fig. 4. As described above, the near-infrared ray IR transmitted from the near-infrared ray sensor 60 passes through the near-infrared ray sensor cover 61, and accordingly, there is a concern that a performance of the near-infrared ray sensor 60 that detects the position of the object OB deteriorates.

In a radar device using an electromagnetic wave, as a method of suppressing refraction generated when the electromagnetic wave passes through a vehicle outer plate positioned in front of the radar device, Patent Literature 1 and Patent Literature 2 describe a technology for setting a thickness of the outer plate through which the electromagnetic wave passes to maximize a transmittance. US 2019/0293485 A1 and WO 2019/058834 A1 disclose further near-infrared ray sensor covers.

CITATION LIST

PATENT LITERATURE

Patent Literature 1: JP-A-2009-156705
Patent Literature 2: JP-A-2017-211199

SUMMARY OF INVENTION

TECHNICAL PROBLEM

However, although the methods described in Patent Literature 1 and Patent Literature 2 can increase a transmittance of near-infrared rays, it is not possible to completely eliminate refraction. Therefore, it is required to further reduce a deviation of a detection position of an object OB by suppressing deterioration of a performance of a near-infrared ray sensor.

The present invention has been made in view of such circumstances, and an object thereof is to provide a near-infrared ray sensor cover capable of suppressing the deterioration of the performance of the near-infrared ray sensor that detects the position of the object.

SOLUTION TO PROBLEM

In order to solve the above-mentioned problems, there is provided a near-infrared ray sensor cover according to claim 1.

According to the above configuration, when the near-infrared ray is transmitted from the near-infrared ray sensor, the near-infrared ray passes through the cover main body portion of the near-infrared ray sensor cover. The near-infrared ray that passes through the cover main body portion is reflected by hitting the object in front in the transmission direction. The reflected near-infrared ray is received by the near-infrared ray sensor after passing through the cover main body portion. In the near-infrared ray sensor, a position of an object is detected by the transmitted and received near-infrared ray.

Here, the incident surface of the first resin layer is inclined with respect to the emission surface by the angle x defined based on (Equation 1) to (Equation 4). Therefore, when the near-infrared ray is transmitted from the near-infrared ray sensor such that an angle formed by the normal line with respect to the emission surface is $\theta$, the near-infrared ray is incident on the incident surface at an angle $(\theta + x)$. The near-infrared ray is refracted at the angle $\alpha$ when passing through the incident surface, and then is incident on the boundary surface at the angle $\beta$. The near-infrared ray refracted at an angle $(= \delta - y)$ when passing through the boundary surface is incident on the emission surface at the angle $\delta$, and is refracted at the angle $\theta$ when passing through the emission surface. In this manner, an angle of the near-infrared ray when transmitted from the near-infrared ray sensor and the angle $\theta$ refracted when passing through the emission surface are the same. As a result, the near-infrared ray sensor can detect the position of the object with the same accuracy as that when the near-infrared ray sensor cover is not provided. In other words, the near-infrared ray passes through the near-infrared ray sensor cover, and accordingly, a phenomenon in which a performance of the near-infrared ray sensor that detects the position of the object deteriorates is suppressed.

A further development is given in claim 2.

According to the above configuration, when visible light is incident on the cover main body portion from the front of the near-infrared ray sensor cover in the transmission direction, the visible light passes through the front base member and is reflected by the decorative layer. When the near-infrared ray sensor cover is seen from the front in the transmission direction, the decorative layer appears to be positioned on the rear side (back side) of the front base member through the front base member. In this manner, the near-infrared ray sensor cover is decorated with the decorative layer, and the appearance of the near-infrared ray sensor cover and the peripheral part thereof is improved.

In particular, the rear surface of the front base member in the transmission direction is composed of the uneven surface. The decorative layer is formed on the uneven surface and has irregularities in the transmission direction. Therefore, when the near-infrared ray sensor cover is seen from the front in the transmission direction, the decorative layer appears three-dimensionally, that is, in a three-dimensional shape in the transmission direction. Therefore, the appearance of the near-infrared ray sensor cover and the peripheral part thereof is further improved.

Furthermore, the decorative layer is positioned in front of the near-infrared ray sensor in the transmission direction. The reflection of visible light on the decorative layer is performed in front of the near-infrared ray sensor in the transmission direction. The decorative layer has a function of hiding the near-infrared ray sensor. Therefore, the near-infrared ray sensor is unlikely to be seen from the front of the near-infrared ray sensor cover in the transmission direction. Therefore, the appearance of the near-infrared ray sensor cover and the peripheral part thereof is improved compared with a case where the near-infrared ray sensor is incorporated in an exposed state or the near-infrared ray sensor can be seen through the near-infrared ray sensor cover.

Incidentally, when the near-infrared ray is transmitted from the near-infrared ray sensor, the near-infrared ray passes through the rear base member, the decorative layer, and the front base member in the cover main body portion in order. The near-infrared ray reflected by hitting the object in front of the near-infrared ray sensor cover in the transmission direction, passes through the front base member, the decorative layer, and the rear base member in the cover main body portion in order, and then is received by the near-infrared ray sensor. In the near-infrared ray sensor, the position of the object is detected by the transmitted and received near-infrared ray.

In this case, as described above, the angle of the near-infrared ray when transmitted from the near-infrared ray sensor and the angle θ refracted when passing through the emission surface are the same. The near-infrared ray sensor can detect the position of the object with the same accuracy as that when the near-infrared ray sensor cover is not provided, and the phenomenon in which the performance of the near-infrared ray sensor that detects the position of the object deteriorates is suppressed.

ADVANTAGEOUS EFFECTS OF INVENTION

According to the near-infrared ray sensor cover, it is possible to suppress deterioration of a performance of the near-infrared ray sensor that detects a position of an object.

BRIEF DESCRIPTION OF DRAWINGS

Fig. 1 is a view illustrating an embodiment of a near-infrared ray sensor cover, and is a schematic diagram for describing a relationship between rear and front base members and a path through which a near-infrared ray passes.
Fig. 2 is a side sectional view illustrating the near-infrared ray sensor cover according to the embodiment together with a near-infrared ray sensor.
Fig. 3 is a partial side sectional view illustrating a part of a cover main body portion in Fig. 2 in an enlarged manner.
Fig. 4 is a view illustrating a near-infrared ray sensor cover in the related art, and is a schematic view for describing a relationship between rear and front base members and a path through which a near-infrared ray passes.

DESCRIPTION OF EMBODIMENTS

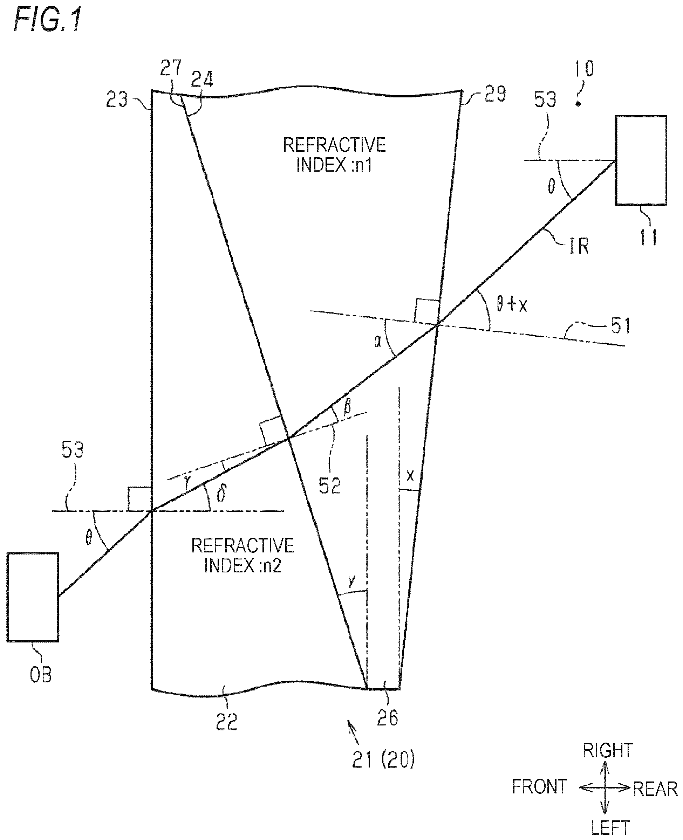

Hereinafter, an embodiment in which a near-infrared ray sensor cover is embodied will be described with reference to Figs. 1 to 3.

In the following description, a forward direction of a vehicle will be referred to as a front and a rearward direction will be referred to as a rear. Further, it is assumed that a left-right direction is a vehicle width direction and coincides with a left-right direction when the vehicle moves forward. Further, in each of Figs. 1 to 3, in order to set a size of each part of the near-infrared ray sensor cover to be recognizable, a scale is appropriately changed to show each part. The same applies to Fig. 4, which describes the related art.

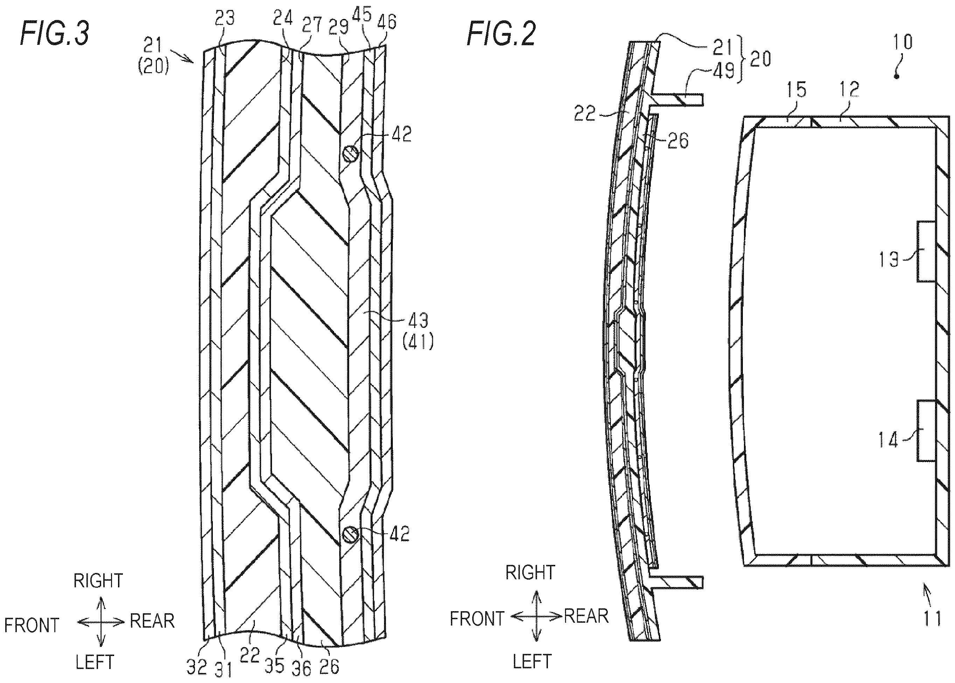

As illustrated in Figs. 1 and 2, a near-infrared ray sensor 11 is installed at a front end portion of a vehicle 10. The near-infrared ray sensor 11 transmits a near-infrared ray IR having a wavelength of approximately 900 nm toward the front of the vehicle 10, and receives the near-infrared ray IR reflected by hitting an object OB outside the vehicle, such as a preceding vehicle or a pedestrian.

As described above, since the near-infrared ray sensor 11 transmits the near-infrared ray IR toward the front of the vehicle 10, a transmission direction of the near-infrared ray IR by the near-infrared ray sensor 11 is a direction from the rear to the front of the vehicle 10. A front of the near-infrared ray IR in the transmission direction substantially coincides with the front of the vehicle 10, and a rear in the same transmission direction substantially coincides with the rear of the vehicle 10. Therefore, in the following description, the front of the near-infrared ray IR in the transmission direction is simply referred to as "front part", "front" or the like, and the rear in the same transmission direction is simply referred to as "rear part", "rear" or the like.

The latter half of the outer shell part of the near-infrared ray sensor 11 is composed of a case 12, and the first half part of the outer shell part is composed of a cover 15. The case 12 is formed of a resin material such as polybutylene terephthalate resin (PBT) in a shape of a bottomed cylinder with an open front surface. In the case 12, a transmitting unit 13 for transmitting the near-infrared ray IR and a receiving unit 14 for receiving the near-infrared ray IR are arranged.

The cover 15 is arranged on a front side of the case 12 and directly covers the transmitting unit 13 and the receiving unit 14. The cover 15 is formed of a resin material containing a visible light cutting pigment, for example, polycarbonate resin (PC), polymethylmethacrylate resin (PMMA), cycloolefin polymer (COP), resin glass, or the like.

As illustrated in Fig. 2, the near-infrared ray sensor cover 20 includes a plate-shaped cover main body portion 21 and an attaching unit 49 that protrudes rearward from a rear surface of the cover main body portion 21. The cover main body portion 21 is positioned in front of the cover 15. The near-infrared ray sensor cover 20 is attached to a front end portion of a vehicle body in the attaching unit 49. The near-infrared ray sensor cover 20 has a function of covering the near-infrared ray sensor 11 from the front and also has a function as a garnish for decorating the front portion of the vehicle 10.

As illustrated in Figs. 1 and 3, a frame part of the cover main body portion 21 is composed of a base member. The base member is made of a front base member 22 that configures a front portion which is a part outside the vehicle and a rear base member 26 that configures a rear portion which is a part inside the vehicle. The rear base member 26 corresponds to a first resin layer, and the front base member 22 corresponds to a second resin layer.

The front base member 22 is formed of a transparent resin material having near-infrared ray IR transmission properties, and has a refractive index n2. The transparency here includes not only colorless transparency but also colored transparency (colored transparency). As a corresponding resin material, the above-mentioned PC and PMMA are representative, but transparent acrylonitrile-butadiene-styrene copolymer resin (ABS) and the like can also be mentioned. A refractive index of PC is 1.59, a refractive index of PMMA is 1.49, and a refractive index of transparent ABS is 1.57. In the present embodiment, the front base member 22 is formed of PC.

A refractive index is a physical quantity that is a basis for propagation of light (here, near-infrared rays) in a substance, and is expressed by "propagation speed of light in air or propagation speed of light in a substance". Since the propagation speed of light differs depending on the substance, the refractive index also differs depending on the substance.

A front surface 23 of the front base member 22 is composed of a single flat surface that is substantially orthogonal to a front-rear direction. The flat surface here refers to a surface having no irregularities, and is not limited to a flat surface, but also includes a surface that is gently curved as a whole. On the other hand, a rear surface of the front base member 22 is composed of an uneven surface 24 having irregularities in the front-rear direction.

The rear base member 26 is formed of a resin material having a refractive index n1 different from a refractive index n2 of the front base member 22, and has near-infrared ray IR transmission properties. The rear base member 26 may be formed of, for example, a resin material (PMMA, ABS, and the like) that is transparent and different from the resin material (PC) that forms the front base member 22. Further, the rear base member 26 may be formed of another transparent resin material. Examples thereof include methyl methacrylate-styrene copolymer resin (MBS), polyamide resin (PA), polystyrene resin (PS) and the like. A refractive index of MBS is 1.50, a refractive index of PA is 1.51, and a refractive index of PS is 1.60. Further, the rear base member 26 may be formed of an opaque resin material. In the present embodiment, the rear base member 26 is formed of PMMA.

A front surface of the rear base member 26 is composed of an uneven surface 27 having irregularities so as to be engaged with the uneven surface 24 of the front base member 22. The uneven surface 24 and the uneven surface 27 correspond to a boundary surface between the front base member 22 and the rear base member 26.

The front base member 22 and the rear base member 26 are connected to each other by a connecting unit (not illustrated) provided therearound. As illustrated in Fig. 3, a hard coat layer 31 having near-infrared ray IR transmission properties and a hardness higher than that of the front base member 22 is laminated on the front surface 23 of the front base member 22. The hard coat layer 31 is formed, for example, by applying a known surface treatment agent to the front surface 23. Examples of the surface treatment agent include organic hard coat agents such as acrylate-based, oxetane-based, and silicone-based agents, inorganic hard coat agents, and organic-inorganic hybrid hard coat agents. Further, as the hard coat agent, a type that is cured by irradiation with ultraviolet rays (UV) may be used, or a type that is cured by applying heat may be used.

The hard coat layer 31 may be composed of a hard coat film having the hardness higher than that of the front base member 22. As the hard coat film, a film formed by applying the surface treatment agent on a film base member made of a transparent resin material such as PC or PMMA can be used.

A water-repellent layer 32 is laminated on a front surface of the hard coat layer 31. The water-repellent layer 32 is composed of, for example, an organic coating film, a silicone film, or the like. A decorative layer 35 and a black presser layer 36 are provided between the front base member 22 and the rear base member 26. The decorative layer 35 is formed of a material having a high transmittance for near-infrared ray IR and a low transmittance for visible light, and is in close contact with the uneven surface 24. The decorative layer 35 may be composed of only a colored decorative layer such as black or blue, may be composed only of a bright decorative layer having a metallic luster, or may be composed of a combination of the colored decorative layer and the bright decorative layer. In the present embodiment, the decorative layer 35 is composed of a combination of the colored decorative layer and the bright decorative layer.

As the decorative layer 35, a decorative film on which the colored decorative layer or the bright decorative layer described above is formed may be used. The black presser layer 36 is a layer for allowing the near-infrared ray IR to pass therethrough while suppressing the transmission of visible light, is composed of a black coating film layer, and is in close contact with the decorative layer 35 and the uneven surface 27.

A heater unit 41 for melting snow is provided on a rear surface 29 of the rear base member 26. In the present embodiment, as the heater unit 41, a heater film 43 having a linear heating element (heater wire) 42 that generates heat by energization is used, and the heater film 43 is laminated on the rear surface 29. The heater film includes a heating element 42 and a pair of transparent base members that sandwich the heating element 42 from both the front and rear sides.

The heating element 42 is formed of a metal such as silver or copper, a metal oxide-based conductive material such as indium tin oxide (ITO) or tin oxide, a carbon heating element, a conductive paste, or the like. The heating element 42 has a linear shape, and includes, for example, a plurality of straight portions extending in parallel with each other and a plurality of connecting units that connect end portions of adjacent straight portions. Both transparent base members are formed of a transparent resin material such as PC.

Instead of the heater film 43, the heating element 42 may be formed on the rear surface 29 of the rear base member 26 as the heater unit 41. In this case, the heating element 42 is formed by applying the same material as above to a part of the rear surface 29 by sputtering, printing, or using a dispenser (liquid quantitative discharge device) or the like. As a conductive paste, for example, a paste in which silver particles or the like are dispersed as a filler in a resin material is used.

Depending on a type of resin material forming the rear base member 26, the rear base member 26 and the heating element 42 may not be compatible with each other, and adhesion therebetween may be low. In this case, it is preferable that an undercoat layer be formed on the rear surface 29 and the heating element 42 be formed on the undercoat layer. In this manner, the heating element 42 can be brought into close contact with the rear base member 26 and peeling of the heating element 42 from the rear base member 26 can be suppressed, as compared with a case where the heating element 42 is formed in a state of being in contact with the rear base member 26. It is needless to say that such an undercoat layer is unnecessary when the compatibility between the rear base member 26 and the heating element 42 is good and there is no problem in the adhesion therebetween.

Further, a protective film formed by curing a paint such as acrylic or urethane may be formed on the undercoat layer and a rear surface of the heating element 42 in order to enhance durability of the heating element 42. On a rear surface of the heater unit 41 when the undercoat layer or the protective film is not provided, a reflection suppressing layer (also called an AR coat) 45 made of a transparent thin film that suppresses reflection of the near-infrared ray IR transmitted from the near-infrared ray sensor 11 is formed. When the undercoat layer or the protective film is provided, a reflection suppressing layer 45 is formed on a rear surface thereof. The reflection suppressing layer 45 has a function of reducing the reflection of the near-infrared ray IR on the rear surface of the cover main body portion 21 by interference of the near-infrared ray IR, and suppressing reduction of an amount of the near-infrared ray IR transmitted through the cover main body portion 21 due to the reflection. The reflection suppressing layer 45 is formed by using a dielectric such as $MgF_2$ (magnesium fluoride) and performing vacuum vapor deposition, sputtering, WET coating, or the like.

The reflection suppressing layer 45 may be composed of a single-layer thin film or a multi-layer thin film. In the latter case, as multiple thin films, those having different refractive indexes and thicknesses may be used. By doing so, it is possible to reduce the reflection of the near-infrared ray IR for a wide range of wavelengths.

Further, as the reflection suppressing layer 45, a layer in which a metal oxide such as $TIO_2$ (titanium dioxide) or $SiO_2$ (silicon dioxide) is laminated may be used. A hydrophilic film 46 is formed on a rear side of the reflection suppressing layer 45. Nano-order fine particles (nanoparticles) made of a metal oxide are uniformly dispersed in the hydrophilic film 46. As the metal oxide, for example, $SiO_2$ (silica) can be used. Furthermore, in the present embodiment, the hydrophilic film 46 is formed such that a contact angle with respect to water is 10 degrees or less. The hydrophilic film 46 may be formed by mixed adsorption (alternate adsorption) of nano-order fine particles (nanoparticles) made of a metal oxide.

The above is a basic configuration (layer configuration) of the cover main body portion 21. As described above, the base member of the present embodiment is composed of the rear base member 26 and the front base member 22 having refractive indexes n1 and n2 different from each other. In general, when light (near-infrared ray IR) passes through a boundary surface between different substances, refraction occurs, which is a phenomenon in which a direction in which light (near-infrared ray IR) travels changes. In the present embodiment, on the premise that such refraction occurs, it is devised that the near-infrared ray sensor 11 can detect the position of the object OB outside the vehicle with the same accuracy as that when the near-infrared ray sensor cover 20 is not arranged in front of the near-infrared ray sensor 11. The device will be described below.

In addition, the near-infrared ray IR also is refracted on a boundary surface between the rear base member 26 and the black presser layer 36, a boundary surface between the decorative layer 35 and the front base member 22, and a boundary surface between the black presser layer 36 and the decorative layer 35. However, a thickness of the decorative layer 35 and the like is extremely small compared to a thickness of the rear base member 26 and the front base member 22. Therefore, influence of the refraction of the near-infrared ray IR on the decorative layer 35 and the black presser layer 36 on the overall refraction of the cover main body portion 21 is negligibly small. Therefore, when considering the refraction that occurs when the near-infrared ray IR propagates through the members configuring the cover main body portion 21, the cover main body portion 21 is composed of only the rear base member 26 and the front base member 22.

Here, as illustrated in Fig. 1, the rear surface 29 of the rear base member 26 is used as an incident surface of the near-infrared ray IR in the cover main body portion 21, and the front surface 23 of the front base member 22 is used as an emission surface of the near-infrared ray IR. In addition, the angles x, y, α, β, γ, δ, and θ are defined as follows.

x: An angle formed by the incident surface and the emission surface

y: An angle formed by the boundary surface between the rear base member 26 and the front base member 22 and the emission surface

$\alpha$: An angle (refraction angle) formed by the near-infrared ray IR refracted when passing through the incident surface and a normal line 51 with respect to the incident surface

$\beta$: An angle formed by the near-infrared ray IR incident on the boundary surface and a normal line 52 with respect to the boundary surface (incident angle)

$\gamma$: An angle (refraction angle) formed by the near-infrared ray IR refracted when passing through the boundary surface and the normal line 52

$\delta$: An angle (incident angle) formed by the near-infrared ray IR, which is refracted when passing through the boundary surface and is incident on the emission surface, and a normal line 53 with respect to the emission surface

$\theta$: An angle (refraction angle) formed by the near-infrared ray IR refracted when passing through the emission surface and the normal line 53

As described above, the uneven surface 24 and the uneven surface 27 correspond to the boundary surface between the front base member 22 and the rear base member 26. Further, an angle $\gamma$ can be obtained by $\delta$ - y.

When defined as described above, the following (Equation 1) to (Equation 4) are established between the angles x, y, $\alpha$, $\beta$, $\delta$, and $\theta$. (Equation 1) to (Equation 3) are applied to Snell's law. Snell's law is a law that expresses a relationship between a propagation speed of a traveling wave in two media in a general refraction phenomenon of waves, the incident angle, and the refraction angle, and is also called refraction law.

$$\sin(\theta + x) = n1\sin\alpha \, ... \, (\text{Equation 1})$$

$$n1\sin\beta = n2\sin(\delta - y) \, ... \, (\text{Equation 2})$$

$$n2\sin\delta = \sin\theta \, ... \, (\text{Equation 3})$$

$$x + y - \alpha - \beta = 0 \text{ or } x + y - \alpha + \beta = 0 \, ... \, (\text{Equation 4})$$

The angle y in the above (Equation 1) to (Equation 4) is determined by an uneven shape of the uneven surface 24 on the front base member 22 and an uneven shape of the uneven surface 27 on the rear base member 26.

Then, in the cover main body portion 21, the incident surface (rear surface 29) is inclined with respect to the emission surface (front surface 23) by the angle x defined based on the above (Equation 1) to (Equation 4).

In addition, which of the equations in the above (Equation 4) is selected is determined by a magnitude relationship between the angle $\gamma$ and the angle $\beta$. When the angle $\gamma$ is smaller than the angle $\beta$ (this corresponds to Fig. 1), x + y - $\alpha$ - $\beta$ = 0 is selected as (Equation 4). When the angle $\gamma$ is larger than the angle $\beta$, x + y - $\alpha$ + $\beta$ = 0 is set as (Equation 4).

Next, the operation of the present embodiment configured as described above will be described. In addition, the effects caused by the operation will also be described.

As illustrated in Figs. 2 and 3, when the near-infrared ray IR is transmitted from the transmitting unit 13, the hydrophilic film 46 of the cover main body portion 21 is irradiated with the near-infrared ray IR. At this time, the reflection of the near-infrared ray IR transmitted through the hydrophilic film 46 by the reflection suppressing layer 45 is suppressed by the reflection suppressing layer 45. An amount of the near-infrared ray IR transmitted through the reflection suppressing layer 45 increases by an amount of this suppression.

The near-infrared ray IR transmitted through the reflection suppressing layer 45 passes through the heater unit 41, the rear base member 26, the black presser layer 36, the decorative layer 35, the front base member 22, the hard coat layer 31, and the water-repellent layer 32 in this order. In this manner, the near-infrared ray IR passes through the cover main body portion 21.

The near-infrared ray IR transmitted through the cover main body portion 21 is reflected by hitting the object OB (refer to Fig. 1), such as a preceding vehicle or a pedestrian. The reflected near-infrared ray IR again passes through the water-repellent layer 32, the hard coat layer 31, the front base member 22, the decorative layer 35, the black presser layer 36, the rear base member 26, the heater unit 41, the reflection suppressing layer 45, and the hydrophilic film 46 on the cover main body portion 21 in order. The near-infrared ray IR transmitted through the cover main body portion 21 is received by the receiving unit 14. The near-infrared ray sensor 11 detects the position of the object OB based on the transmitted and received near-infrared ray IR, and also measures a distance between the vehicle 10 and the object OB, a relative speed, and the like.

Here, as illustrated in Fig. 1, the rear surface 29 of the rear base member 26 configuring the incident surface is inclined by the angle x defined based on the above (Equation 1) to (Equation 4) with respect to the front surface 23 of the front base member 22 configuring the emission surface. Therefore, when the near-infrared ray IR is transmitted from the near-infrared ray sensor 11 such that an angle formed by the normal line 53 with respect to the front surface 23 is $\theta$, the near-infrared ray is incident on the rear surface 29 at an angle ($\theta$ + x). The near-infrared ray IR is refracted at the angle $\alpha$ when passing through the rear surface 29, and then is incident on the uneven surface 24 and the uneven surface 27 configuring the boundary surface at the angle $\beta$. The near-infrared ray IR refracted at the angle $\gamma$ (= $\delta$ - y) when passing through the uneven surface 24 and the uneven surface 27 is incident on the front surface 23 at the angle $\delta$ and is refracted at the angle $\theta$ when passing through the front surface 23. In this manner, an angle of the near-infrared ray IR when transmitted from the near-infrared ray sensor 11 and the angle $\theta$ refracted when passing through the front surface 23 are the same. In other words, an angle of the near-infrared ray IR before passing through the cover main body portion 21 and an angle of the near-infrared ray IR after passing through are the same. As a result, the near-infrared ray sensor 11 can detect the position of the object OB with the same accuracy as that when the near-infrared ray sensor cover 20 is not provided. In other words, the near-infrared ray IR passes through the near-infrared ray sensor cover 20, and accordingly, it is possible to suppress the deterioration of the performance of the near-infrared ray sensor 11 that detects the position of the object OB.

Further, as described with reference to Fig. 3, the amount of the near-infrared ray IR transmitted through the cover main body portion 21 is increased by an amount that the reflection of the near-infrared ray IR is suppressed by the reflection suppressing layer 45, and the transmittance is increased. Therefore, the cover main body portion 21 is unlikely to interfere with the transmission of the near-infrared ray IR. Of the near-infrared ray IR, an amount attenuated by the cover main body portion 21 can be kept within an allowable range. Therefore, the near-infrared ray sensor 11 tends to exert a function of detecting the position of the object OB and a function of measuring the distance, the relative speed, and the like.

Furthermore, in the near-infrared ray sensor cover 20, the hard coat layer 31 enhances impact resistance of the cover main body portion 21. Therefore, the hard coat layer 31 can suppress damage to the cover main body portion 21, which is caused by flying stones or the like. Further, the hard coat layer 31 enhances weather resistance of the cover main body portion 21. Therefore, the hard coat layer 31 can suppress degeneration or deterioration of the cover main body portion 21 due to sunlight, wind and rain, temperature changes, and the like. In this respect as well, the near-infrared ray sensor 11 tends to exert the function of detecting the position of the object OB and the function of measuring the distance, the relative speed, and the like.

Further, since the front surface of the cover main body portion 21 is composed of the water-repellent layer 32, even when water adheres to the front surface of the cover main body portion 21, water is repelled. The cover main body portion 21 is unlikely to get wet, and it is possible to suppress formation of a water film on the front surface of the cover main body portion 21.

Meanwhile, the heating element 42 in the heater unit 41 generates heat when energized. A part of this heat is transferred to the front surface of the cover main body portion 21. Therefore, even when snow adheres to the front surface of the cover main body portion 21, the heating element 42 generates heat by energization, and the snow is melted by the heat transferred from the heating element 42. Even when it snows, the near-infrared ray sensor 11 can exert the function of detecting the position of the object OB and a function of measuring the distance, the relative speed, and the like.

Further, when the near-infrared ray sensor 11 arranged behind the cover main body portion 21 becomes hot due to the operation, there is a concern that the heat causes dew condensation on the rear surface of the cover main body portion 21 to cause cloudiness. However, in the present embodiment, the rear surface of the cover main body portion 21 is composed of the hydrophilic film 46, and the contact angle with respect to water is 10 degrees or less. Condensed water spreads on the hydrophilic film 46. Therefore, cloudiness of the rear surface of the cover main body portion 21 is suppressed. Therefore, the reflection suppressing layer 45 can sufficiently exert a function of suppressing the reflection of the near-infrared ray IR.

Incidentally, when the cover main body portion 21 is irradiated with visible light from the front side, the visible light passes through the water-repellent layer 32, the hard coat layer 31, and the front base member 22, and is reflected by the decorative layer 35. When the near-infrared ray sensor cover 20 is seen from the front of the vehicle 10, the decorative layer 35 appears to be positioned on the rear side (back side) of the front base member 22 through the water-repellent layer 32, the hard coat layer 31, and the front base member 22. As for the colored decorative layer in the decorative layers 35, the color of the colored decorative layer can be seen. Further, as for the bright decorative layer in the decorative layers 35, the bright decorative layer appears to be brilliant like metal. In this manner, the near-infrared ray sensor cover 20 is decorated with the decorative layer 35, and the appearance of the near-infrared ray sensor cover 20 and the peripheral part thereof is improved.

In particular, the rear surface of the front base member 22 is composed of the uneven surface 24. The decorative layer 35 is formed on the uneven surface 24 and has irregularities. Therefore, when the near-infrared ray sensor cover 20 is seen from the front of the vehicle 10, the part of the decorative layer 35 that protrudes forward appears to be positioned on the front side (front side), and the part other than this appears to be positioned on the rear side (back side). In other words, the decorative layer 35 appears three-dimensionally, that is, in a three-dimensional shape in the front-rear direction.

Therefore, the appearance of the near-infrared ray sensor cover 20 and the peripheral part thereof is further improved. It is difficult to obtain such an effect with a near-infrared ray sensor cover in which the rear surface of the front base member 22 is composed of a single flat surface and a decorative layer is formed on the flat surface.

The reflection of visible light on the decorative layer 35 is performed on the front side of the near-infrared ray sensor 11. The decorative layer 35 has a function of covering and hiding the near-infrared ray sensor 11. Therefore, the near-infrared ray sensor 11 is unlikely to be seen from the front side of the near-infrared ray sensor cover 20. Therefore, the near-infrared ray sensor cover 20 is not used, and the near-infrared ray sensor 11 is incorporated into the vehicle body in an exposed state, and the appearance of the near-infrared ray sensor 11 is improved compared to that when the near-infrared ray sensor 11 is seen through the near-infrared ray sensor cover 20.

In addition, the above embodiment can also be implemented as a modification example in which the embodiment is modified as follows. The above embodiment and the following modification examples can be implemented in combination with each other within a technically consistent range.

- A reflection suppression structure unit may be provided instead of the reflection suppressing layer 45.

In this case, the heater unit 41 made of the linear heating element 42 is formed on the rear surface 29 of the rear base member 26. The reflection suppression structure unit is formed at a rear portion including the rear surface 29 of the rear base member 26, which is at least a part of a place different from the place where the heater unit 41 is provided.

The reflection suppression structure unit has a moth-eye structure having a fine uneven shape. The moth-eye structure is an uneven structure having an average period shorter than a wavelength of light ray (near-infrared ray IR), as seen on a surface of moth eyes. The uneven shape has a reflection suppressing surface that is inclined with respect to the front-rear direction and suppresses the reflection of near-infrared ray.

In this modification example, when the near-infrared ray IR is transmitted from the transmitting unit 13 of the near-infrared ray sensor 11, the rear surface of the cover main body portion 21 is irradiated with the near-infrared ray IR. At this time, the near-infrared ray IR with which the reflection suppression structure unit is irradiated is suppressed by the reflection suppressing surface.

Also in this case, as in the above embodiment, the amount of the near-infrared ray IR transmitted through the cover main body portion 21 is increased by an amount that the reflection of the near-infrared ray IR is suppressed by the reflection suppression structure unit, and the transmittance is increased. Therefore, the cover main body portion 21 is unlikely to interfere with the transmission of the near-infrared ray IR. Of the near-infrared ray IR, the amount attenuated by the cover main body portion 21 can be kept within an allowable range. Therefore, the near-infrared ray sensor 11 tends to exert various detection functions such as the position detection.

- As described above, when the heater unit 41 and the reflection suppression structure unit are provided on the rear surface of the rear base member 26, at least the reflection suppression structure unit of the heater unit 41 and the reflection suppression structure unit may be covered from the rear side by the above-described hydrophilic film 46.
- The reflection suppressing layer 45 or the reflection suppression structure unit may be omitted as long as the reflection on the rear surface of the cover main body portion 21 of the near-infrared ray IR transmitted from the transmitting unit 13 of the near-infrared ray sensor 11 is acceptable.
- The near-infrared ray sensor cover 20 can be applied even when the near-infrared ray sensor 11 is installed at a place different from the front portion of the vehicle 10, for example, at the rear portion. In this case, the near-infrared ray sensor 11 transmits the near-infrared ray IR toward the rear part of the vehicle 10. The near-infrared ray sensor cover 20 is arranged in front of the transmitting unit 13 in the transmission direction of the near-infrared ray IR, that is, at the rear part of the vehicle 10 with respect to the transmitting unit 13.

The near-infrared ray sensor cover 20 is also applicable when the near-infrared ray sensor 11 is installed on both side portions of the front portion or the rear portion of the vehicle 10, that is, on the diagonal front side portion or the diagonal rear side portion.

REFERENCE SIGNS LIST

| 11 | Near-infrared ray sensor |
|----|--------------------------|
| 20 | Near-infrared ray sensor cover |
| 21 | Cover main body portion |
| 22 | Front base member (second resin layer) |
| 23 | Front surface (emission surface) |

| 24 | Uneven surface (boundary surface) |
| 26 | Rear base member (first resin layer) |
| 27 | Uneven surface (boundary surface) |
| 29 | Rear surface (incident surface) |
| 35 | Decorative layer |
| 51, 52, 53 | Normal line |
| IR | Near-infrared ray |
| n1, n2 | Refractive index |
| x, y, $\alpha$, $\beta$, $\delta$, $\theta$, $\gamma$ | Angle |

**Claims**

1. A near-infrared ray sensor cover (20) comprising:
a cover main body portion (21) that is arranged in front in a transmission direction of a near-infrared ray (IR) transmitted from a near-infrared ray sensor (11), and has near-infrared ray transmission properties, wherein:

the cover main body portion (21) has a first resin layer (26) having a refractive index n1 and a second resin layer (22) formed on a front side of the first resin layer (26) in the transmission direction and having a refractive index n2 different from the refractive index n1, sets a rear surface (29) of the first resin layer (26) in the transmission direction as an incident surface (29) of the near-infrared ray (IR), and sets a front surface (23) of the second resin layer (22) as an emission surface (23) of the near-infrared ray (IR); and
when an angle formed by the near-infrared ray (IR) refracted when passing through the emission surface (23) and a normal line (53) with respect to the emission surface (23) is $\theta$, an angle formed by the incident surface (29) and the emission surface (23) is x, an angle formed by uneven surfaces (24, 27) configuring a boundary surface (24, 27) between the first resin layer (26) and the second resin layer (22) and the emission surface (23) is y, an angle formed by the near-infrared ray (IR) refracted when passing through the incident surface (29) and a normal line (51) with respect to the incident surface (29) is $\alpha$, an angle formed by the near-infrared ray (IR) incident on the boundary surface (24, 27) and a normal line (52) with respect to the boundary surface (24, 27) is $\beta$, and an angle formed by the near-infrared ray (IR) refracted when passing through the boundary surface (24, 27) and the normal line (53) with respect to the emission surface (23) is $\delta$, the incident surface (29) is inclined with respect to the emission surface (23) by the angle x defined based on the following (Equation 1) to (Equation 4) that establish relationships of the angles x, y, $\alpha$, $\beta$, $\delta$, and $\theta$.

$$\sin(\theta + x) = n1\sin\alpha \ ... \ (\text{Equation 1})$$

$$n1\sin\beta = n2\sin(\delta - y) \ ... \ (\text{Equation 2})$$

$$n2\sin\delta = \sin\theta \ ... \ (\text{Equation 3})$$

when

$$\gamma < \text{ß}, \ x + y - a - \text{ß} = 0, \ \text{or, when} \ \gamma > \text{ß}, \ x + y - a + \text{ß} = 0 \ ... \ (\text{Equation 4}).$$

2. The near-infrared ray sensor cover (20) according to claim 1, wherein:

the second resin layer (22) is made of a front base member composed of a transparent resin material;
the first resin layer (26) is made of a rear base member composed of a resin material; and
a decorative layer (35) made of a material that reflects visible light and has near-infrared ray transmission properties is formed between the front base member and the rear base member.

**Patentansprüche**

1. Nahinfrarotstrahlsensorabdeckung (20) mit:
einem Abdeckungshauptkörperabschnitt (21), der in einer Transmissionsrichtung eines Nahinfrarotstrahls (IR), der von einem Nahinfrarotstrahlsensor (11) gesendet wird, vorne angeordnet ist und Nahinfrarotstrahltransmissionseigenschaften aufweist, bei der:

der Abdeckungshauptkörperabschnitt (21) eine erste Harzschicht (26), die einen Brechungsindex n1 aufweist, und eine zweite Harzschicht (22), die in der Transmissionsrichtung auf einer Vorderseite der ersten Harzschicht (26) ausgebildet ist und einen Brechungsindex n2 aufweist, der von dem Brechungsindex n1 verschieben ist, aufweist, eine hintere Oberfläche (29) der ersten Harzschicht (26) in der Transmissionsrichtung als eine Einfallsfläche (29) des Nahinfrarotstrahls (IR) festlegt und eine vordere Oberfläche (23) der zweiten Harzschicht (22) als eine Emissionsfläche (23) des Nahinfrarotstrahls (IR) festlegt; und

wenn ein Winkel, der durch den Nahinfrarotstrahl (IR), der gebrochen wird, wenn er durch die Emissionsfläche (23) verläuft, und eine Normale (53) in Bezug auf die Emissionsfläche (23) ausgebildet wird, $\theta$ ist, ein Winkel, der durch die Einfallsfläche (29) und die Emissionsfläche (23) ausgebildet wird, x ist, ein Winkel, der durch unebene Flächen (24, 27), die eine Grenzfläche (24, 27) zwischen der ersten Harzschicht (26) und der zweiten Harzschicht (22) ausbilden, und die Emissionsfläche (23) ausgebildet wird, y ist, ein Winkel, der durch den Nahinfrarotstrahl (IR), der gebrochen wird, wenn er durch die Einfallsfläche (29) verläuft, und eine Normale (51) in Bezug auf die Einfallsfläche (29) ausgebildet wird, $\alpha$ ist, ein Winkel, der durch den Nahinfrarotstrahl (IR), der auf der Grenzfläche (24, 27) einfällt, und eine Normale (52) in Bezug auf die Grenzfläche (24, 27) ausgebildet wird, $\beta$ ist, und ein Winkel, der durch den Nahinfrarotstrahl (IR), der gebrochen wird, wenn er durch die Grenzfläche (24, 27) verläuft, und die Normale (53) in Bezug auf die Emissionsfläche (23) ausgebildet wird, $\delta$ ist, die Einfallsfläche (29) in Bezug auf die Emissionsfläche (23) in dem Winkel x, der basierend auf der folgenden (Gleichung 1) bis (Gleichung 4), die Beziehungen der Winkel x, y, $\alpha$, $\beta$, $\delta$ und $\theta$ herstellen, definiert ist, geneigt ist.

$$\sin(\theta + x) = n1\sin\alpha \dots \text{(Gleichung 1)}$$

$$n1\sin\beta = n2\sin(\delta - y) \dots \text{(Gleichung 2)}$$

$$n2\sin\delta = \sin\theta \dots \text{(Gleichung 3)}$$

wenn

$$\gamma < \beta, \; x + y - a - \beta = 0, \; \text{oder wenn } \gamma > \beta, \; x + y - a + \beta = 0 \dots \text{(Gleichung 4)}.$$

2. Nahinfrarotstrahlsensorabdeckung (20) nach Anspruch 1, bei der:

die zweite Harzschicht (22) aus einem vorderen Basisbauteil ausgebildet ist, das aus einem transparenten Harzmaterial besteht;
die erste Harzschicht (26) aus einem hinteren Basisbauteil ausgebildet ist, das aus einem Harzmaterial besteht; und
eine dekorative Schicht (35), die aus einem Material ausgebildet ist, das sichtbares Licht reflektiert und Nahinfrarotstrahltransmissionseigenschaften aufweist, zwischen dem vorderen Basisbauteil und dem hinteren Basisbauteil ausgebildet ist.

**Revendications**

1. Couverture de capteur de rayon proche infrarouge (20) comprenant :

une partie principale de corps de couverture (21) qui est disposée devant dans une direction de transmission d'un rayon proche infrarouge (IR) transmis par un capteur de rayon proche infrarouge (11), et qui a des propriétés de transmission de rayon proche infrarouge, dans laquelle :

la partie principale de corps de couverture (21) comporte une première couche de résine (26) ayant un indice de réfraction n1 et une seconde couche de résine (22) formée sur une face avant de la première couche de résine (26) dans la direction de transmission et ayant un indice de réfraction n2 différent de l'indice de réfraction n1, définit une surface arrière (29) de la première couche de résine (26) dans la direction de transmission comme une surface incidente (29) du rayon proche infrarouge (IR), et définit une surface avant (23) de la seconde couche de résine (22) comme une surface d'émission (23) du rayon proche infrarouge (IR) ; et

lorsqu'un angle formé par le rayon proche infrarouge (IR) réfracté en passant par la surface d'émission (23) et une ligne normale (53) par rapport à la surface d'émission (23) est $\theta$, un angle formé par la surface incidente (29) et la surface d'émission (23) est x, un angle formé par des surfaces inégales (24, 27) configurant une surface limite (24, 27) entre la première couche de résine (26) et la seconde couche de résine (22) et la surface d'émission (23) est y, un angle formé par le rayon proche infrarouge (IR) réfracté lorsqu'il traverse la surface incidente (29) et une ligne normale (51) par rapport à la surface incidente (29) est $\alpha$, un angle formé par le rayon proche infrarouge (IR) incident sur la surface limite (24, 27) et une ligne normale (52) par rapport à la surface limite (24, 27) est $\beta$, et un angle formé par le rayon proche infrarouge (IR) réfracté lors du passage à travers la surface limite (24, 27) et la ligne normale (53) par rapport à la surface d'émission (23) est $\delta$, la surface incidente (29) est inclinée par rapport à la surface d'émission (23) d'un angle x défini sur la base des équations suivantes (équation 1) à (équation 4) qui établissent des relations entre les angles x, y, $\alpha$, $\beta$, $\delta$ et $\theta$.

$$\sin(\theta + x) = n1\sin\alpha \dots \text{(Équation 1)}$$

$$n1\sin\beta = n2\sin(\delta - y) \dots \text{(Équation 2)}$$

$$n2\sin\delta = \sin\theta \dots \text{(Équation 3)}$$

lorsque

$$\gamma < \beta, \ x + y - a - \beta = 0, \ \text{ou, lorsque } \gamma > \beta, \ x + y - a + \beta = 0 \dots \text{(Équation 4)}.$$

2. Couverture de capteur de rayon proche infrarouge (29) selon la revendication 1, dans laquelle :

la seconde couche de résine (22) est constituée d'un élément de base avant composé d'un matériau de résine transparent ;
la première couche de résine (26) est constituée d'un élément de base arrière composé d'un matériau de résine ; et
une couche décorative (35) constituée d'un matériau qui réfléchit la lumière visible et possède des propriétés de transmission de rayon proche infrarouge est formée entre l'élément de base avant et l'élément de base arrière.

## FIG.1

*FIG.3*

*FIG.2*

RIGHT

FRONT ↔ REAR

LEFT

RIGHT

FRONT ↔ REAR

LEFT

EP 4 075 160 B1

14

FIG.4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190293485 A1
- WO 2019058834 A1
- JP 2009156705 A
- JP 2017211199 A